# EUROPEAN PATENT APPLICATION

(11) **EP 3 430 910 A1**
(43) Date of publication of application: **23.01.2019**
(21) Application number: 18184454.9
(22) Date of filing: 19.07.2018
(51) Int. Cl.: A23G 3/00, B44C 3/12

(54) **PAINT BY CANDY MOSAIC AND KIT**

(30) Priority: 20.07.2017 US 201762534752 P; 17.10.2017 US 201762573553 P; 20.06.2018 US 201816012523
(71) Applicant: Roessler, Ryan J., Highland Park, IL 60035 (US)
(72) Inventor: Roessler, Ryan J., Highland Park, IL 60035 (US)
(74) Representative: Gill, David Alan

(57) **Abstract**

A kit for making a mosaic design using multiple pieces of like sized and shaped pieces of candy is disclosed. The kit comprises a matrix holder comprising a plurality of enclosed wall spaces arranged in regular array, and a supply of candies which can be of an ovoid size and shape of so-called jellybeans. The mosaic spaces are sized and shaped to accept these candies. Some of the candies can be of a variety of colors or can otherwise have visual appearances differing from other candies. When the candies are arranged within the matrix, an artistic mosaic picture is presented. In effect, the kit user has, by the choice and arrangement of candy colors, painted an image.

## Description

### CROSS-REFERENCE TO RELATED APPLICATIONS

This application claims priority from US provisional application serial number 62/534, 752 filed July 20, 2017; and from US provisional application serial number 62/573, 553 filed October 17, 2017.

### BACKGROUND OF THE INVENTION

This invention provides a kit for assembling a mosaic image. The kit can also include instructions and suggestions to provide children and intuitive, curious adults with experiences that stimulate and encourage their natural creativity. Users of the kit and the instructions and suggestions can create mosaics of attractive and engaging abstract or illustrative designs. The mosaic pieces can be edible candy of various colors.

### OBJECTS OF THE INVENTION

It is an object of the invention to provide a matrix and a supply of discrete objects which can be fit into the matrix spaces, whereby the user can create artistic designs such as pictures.

Still more specifically, it is an object to provide the discrete objects in forms and appearances which will be attractive to the user.

Other objects and advantages of the invention will become apparent upon reading the following detailed description and upon reference to the drawings. Throughout the drawings, like reference numerals refer to like parts.

### BRIEF DESCRIPTION OF THE DRAWINGS

To understand the present invention, it will now be described by way of example, with reference to the accompanying drawings and attachments in which:
Figure 1 is an exploded view showing, in isometric form, the principal parts of the invention.
Figure 2 is an isometric view showing a retainer frame, a matrix retained within the frame, some pieces of a design emplaced in the matrix, and a creator's hand in the act of inserting another design piece in the matrix.
Figure 3 is an isometric view showing a retainer frame, a fully completed design comprising a filled matrix, and a retainer cover.

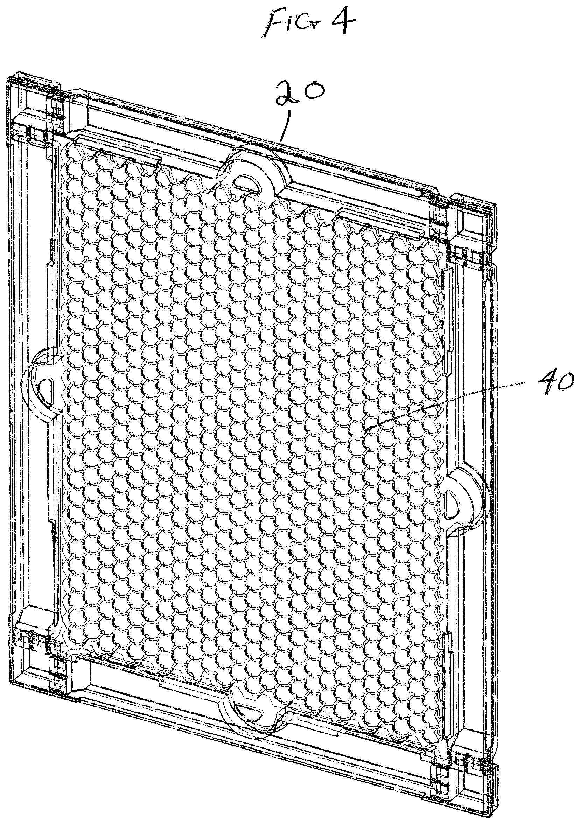

Figure 4 is an isometric view showing in further detail the retainer frame and the completed design matrix.
Figure 5 is an isometric view showing the completed image and image frame as they appear when the design project has been completed.
Figure 6 is an exploded view showing a design illustration on, for example, a paper; the design matrix about to be placed over the design illustration paper; and a frame about to be placed over the matrix.
Figure 7 is an isometric view showing an alternate embodiment of a design frame.
Figure 8 is an isometric view showing the frame and matrix, a side of the frame being turned down to permit removal of the matrix from the frame.

### DETAILED DESCRIPTION

While the invention will be described in connection with a preferred embodiment and procedure, it will be understood that it is not intended to limit the invention to this embodiment or procedure. On the contrary, I intend to cover all alternatives, modifications and equivalents as may be included within the spirit and scope of the invention.

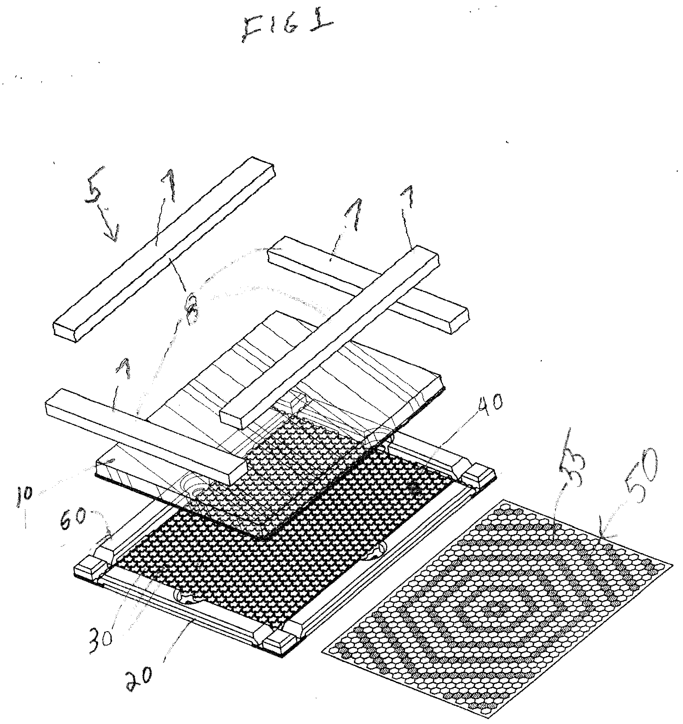

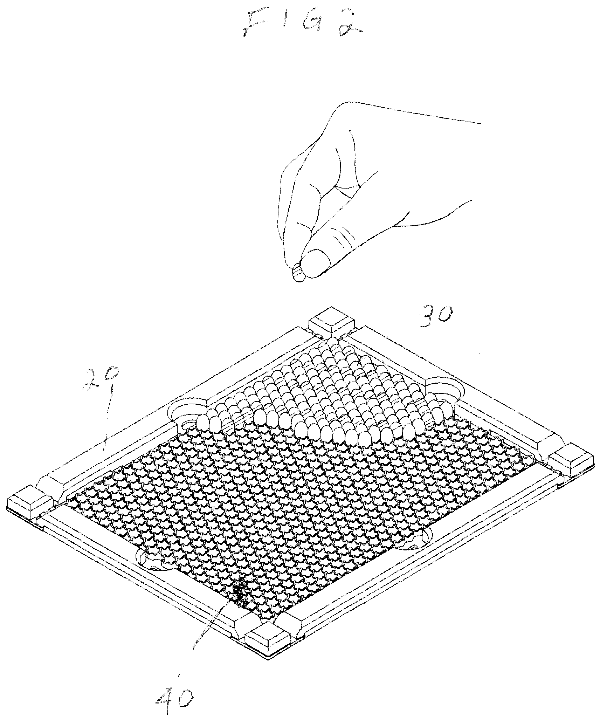

Turning first to Figures 1 and 2, there is shown a kit 5 comprising the parts or elements of the invention. The kit comprises pieces 7 of an outer frame 8, a lid 10, an underlying retainer subframe 20, and a quantity of candy 30. This candy 30 can comprise a multitude of individual candy pieces, preferably of like size and shape but differing in color, hue, ingredients or other attributes.

As shown in Figure 2, the individual candy pieces 30 are sized and shaped to be placed within a regularized matrix or insert 40 which can be made of colored or clear, transparent plastic, thin metal such as aluminum or tin, or other materials. The supply of candy pieces should be sufficient to fill every matrix space plus extra candy pieces in sufficient number to allow for loss - and for user consumption.

As shown in Figure 1, below the matrix 40 is an optional paper 50. Here the paper 50 presents an image 55 which provides a map for filling the matrix with objects such as candies of various colors. Alternatively, the paper can have a uniform white appearance or image to maximize reflection of impinging light so as to illuminate unfilled matrix spaces to the kit user. The retainer subframe 20 and an underlying bottom are sized and shaped and are of sufficiently rugged construction to hold the paper 50, the matrix 40, the candy 30, the subframe 20 and the outer frame 5 and a transparent cover 10.

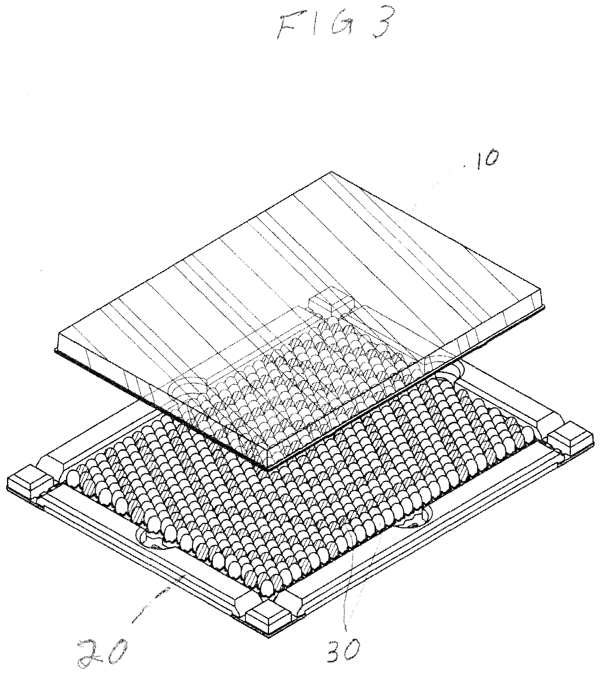

Alternatively, the paper 50 can be omitted and a previously prepared image 55 which is the full size of the box can be placed in an underlying position beneath the matrix40, as suggested in Figure 1. In accordance with this arrangement, the user can see that, for example, red jellybean candy pieces should be placed in those matrix spaces under which the color red can be seen, as shown in Figures 2, 3, 5 and 6.

To develop a candy mosaic picture or image, the user places the underlying paper 50 within the subframe and the bottom, and then places the insert or matrix 40 over the paper and inside the subframe 20. This matrix 40 can be made of any suitable material such as aluminum or food grade polycarbonate acetate materials. The interstitial spaces defined by the matrix 40 are sized and shaped to closely hold the candy pieces to be inserted, but the spaces are not so small as to damage or deform the candy pieces. If the candy pieces are ovoid in shape the spaces are preferably sized to support the candy pieces in generally upright positions or configurations. For example, variously colored jelly beans 30 can be provided, as suggested in Figure 2.

Alternatively, if desired, a computer app can be provided on a digital display device such as a mobile phone. By calling up and using this app, the user can see a desired image such as the image 55. A virtual grid representing the matrix can be shown on the mobile screen. Thus, the user can promptly see the color of the candy which should be placed in each of the interstitial spaces, and where in the actual matrix spaces are.

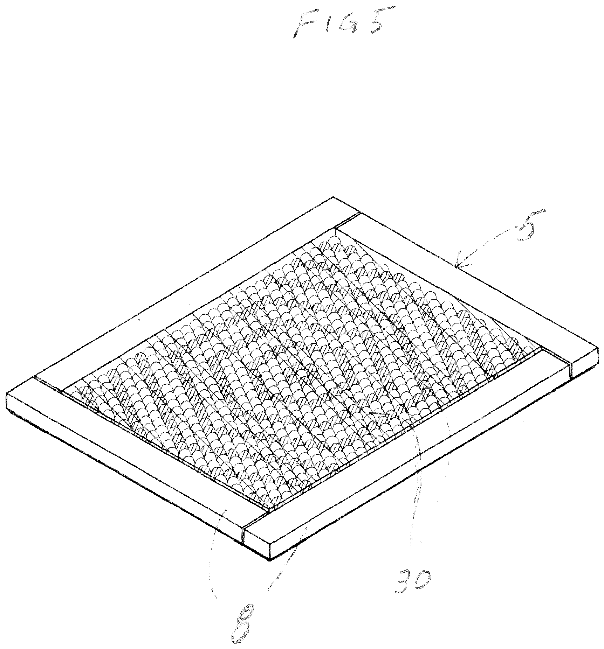

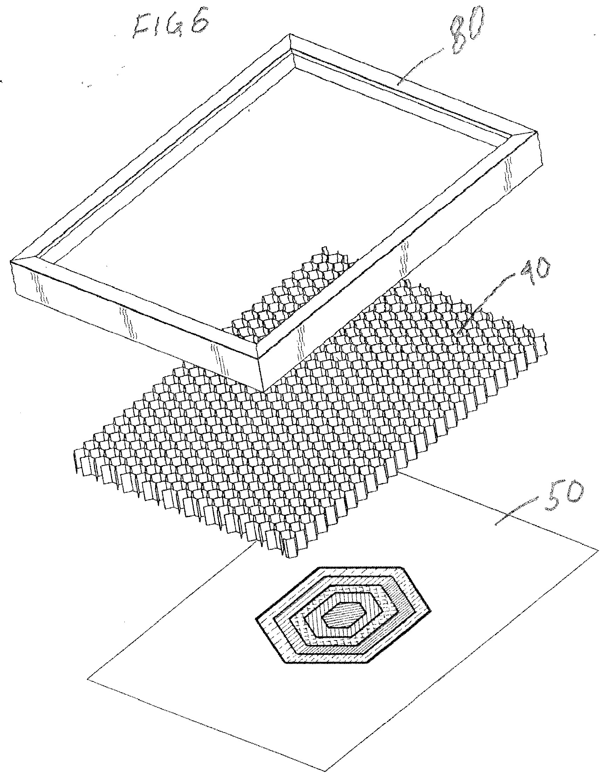

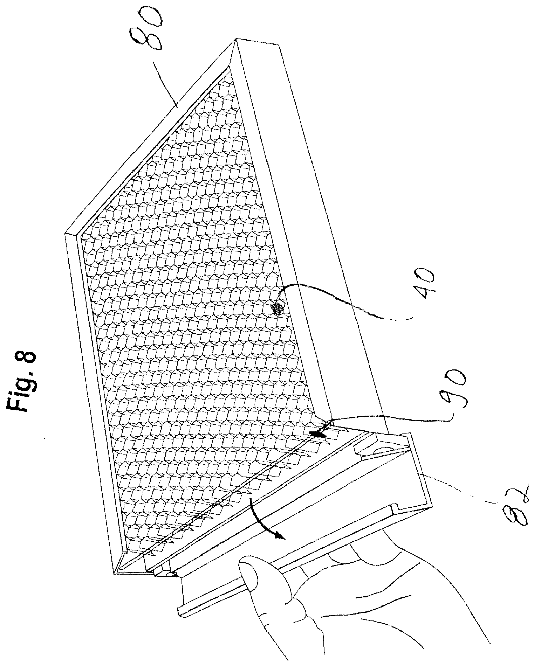

To complete and save the image from damage, loss or consumption, a border frame 80 comprising the frame constituents 7, as shown in Figure 5, can be placed around the image as shown in Figure 6, and a final lens cover 90 can be fitted over the finished image as shown in Figure 8.

If desired, light can be projected through the lens cover 20 to highlight and draw attention to the completed image.

If desired, the frame 80 can be provided with a hinged or removable frame end 82 as shown in figure 8. This permits the matrix 40 to be inserted and withdrawn, either completely or partially, as desired to adjust or realign jellybeans or other elements in the matrix 40.

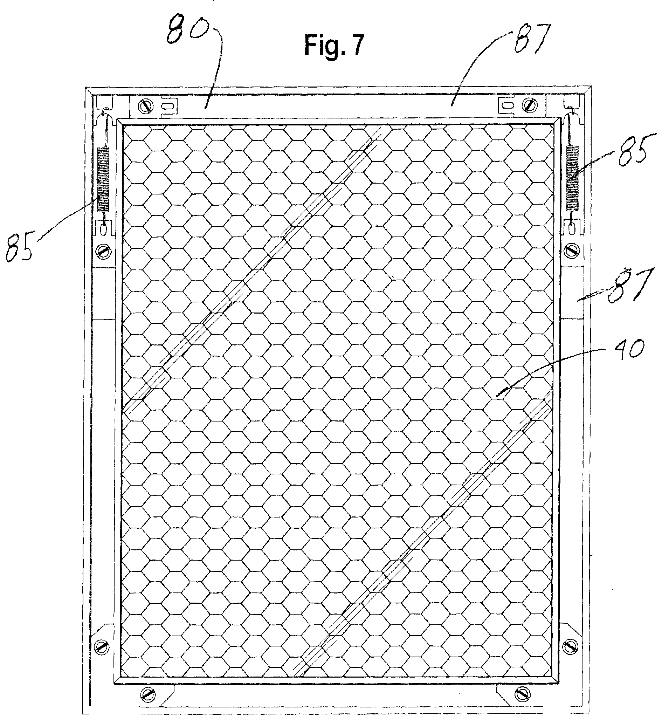

As shown in figure 7, tensioning springs 85 can be attached to frame elements 87 so that the frame 80 will firmly surround the matrix and any contained jellybeans or other image-forming elements.

It will be understood that various modifications can be made to the kit elements and image creation procedures without departing from the spirit and scope of the invention

## Claims

1. A kit for making a mosaic design using multiple pieces of like sized and shaped pieces of candy, the kit comprising, in combination,
a matrix holder comprising a plurality of walls defining enclosed wall spaces arranged in a regular array, each enclosed wall space having a size and shape substantially like the size and shape of adjacent enclosed wall spaces,
the kit further comprising a plurality of candies,
each candy having a size and shape substantially like the size and shape of other candies and formed to fit within the matrix enclosed wall spaces,
at least some of the candies having a visual appearance differing from other candies whereby to permit the kit user to form a mosaic design in the matrix with the candy.

2. A kit according to claim 1 wherein said candies are ovoid in shape.

3. A kit according to claim 1 or 2 wherein said candies vary in color.

4. A kit according to claim 1, 2 or 3 wherein said matrix holder is metal.

5. A kit according to claim 1, 2 or 3 wherein said matrix holder is translucent plastic.

6. A kit according to claim 1, 2, 3, 4 or 5 further including an app associated with the kit, the app being capable of creating an image design for use with the matrix and the candies.

7. A method of making a mosaic design comprising the steps of:
providing a matrix holder comprising a plurality of enclosed wall spaces arranged in a regular array,
each enclosed wall space having a size and shape substantially like the size and shape of adjacent wall space,
and placing within the wall spaces candies formed to fit within the wall spaces.

8. A method according to claim 7 further including the step of using an app to enable the creation of said design.

9. A method according to claim 8 wherein said app creates a virtual matrix grid overlying said design.
